# EUROPÄISCHE PATENTANMELDUNG

(11) **EP 1 254 754 A2**
(43) Veröffentlichungstag der Anmeldung: **06.11.2002**
(21) Anmeldenummer: 02008683.1
(22) Anmeldetag: 18.04.2002
(51) Int. Cl.: B29C 45/44

(54) **Spritzgiesswerkzeug und damit erzeugtes Werkstück**

(30) Priorität: 02.05.2001 DE 10121343
(71) Anmelder: Opus IV Limited Partnership, St. Peter Port, Guernsey GY1 3ZG (GB)
(72) Erfinder: Schütz, Alfed, 3052 Zollikofen (CH)
(74) Vertreter: Schlagwein, Udo, Dipl.-Ing.

(57) **Zusammenfassung**

Ein Spritzgießwerkzeug (5) für ein Werkstück (1) hat zwei parallel zueinander ausgerichtete, in eine Hohlform einführbare Kernstempel (9, 10) und einen Querkanalkern (11). Dieser Querkanalkern (11) ist als schnabelförmiges Kopfstück schwenkbar am freien Ende des einen Kernstempels (9) befestigt und kann mittels eines Schwenkantriebs (14) in eine zu dem anderen Kernstempel (10) führende Schwenkstellung bewegt werden. Das mit dem Spritzgießwerkzeug (5) erzeugte Werkstück (1) hat entsprechend der Form des Querkanalkernes (11) einen schnabelförmigen Querkanal.

## Beschreibung

Die Erfindung betrifft ein Spritzgießwerkzeug für ein Werkstück mit zwei von einer Seite aus in das Werkstück hineinführenden Kammern, welche durch einen Querkanal an der tiefsten Stelle nach Art eines Siphons miteinander verbunden sind, wozu das Spritzgießwerkzeug zwei parallel zueinander ausgerichtete, in eine Hohlform einführbare Kernstempel und einen Querkanalkern hat. Weiterhin betrifft die Erfindung ein mit einem solchen Spritzgießwerkzeug erzeugtes Werkstück.

Spritzgießwerkzeuge der vorstehenden Art sind zur Erzeugung von Werkstücken aus Kunststoff allgemein bekannt und gebräuchlich. Problematisch bei solchen Spritzgießwerkzeugen ist die Gestaltung des Querkanals, weil dieser zu Problemen beim Entformen des Werkstückes führt. Für eine rationelle Fertigung strebt man an, das jeweils erzeugte Werkstück von den Kernstempeln abstreifen zu können, was jedoch durch den Querkanalkern verhindert wird. Deshalb müsste man das Spritzgießwerkzeug aus mehreren, separat auseinander fahrbaren Werkzeugteilen zusammensetzen, was zu hohen Kosten führt und die Produktionsgeschwindigkeit herabsetzt. Oftmals behilft man sich auch dadurch, dass man zunächst einen zu einer Außenseite des Werkstückes hin offenen Querkanal erzeugt und diesen nach dem Entformen des Werkstückes durch einen Stopfen verschließt, was jedoch ebenfalls die Herstellungskosten erhöht und das Aussehen des Werkstückes beeinträchtigt.

Der Erfindung liegt das Problem zugrunde, ein Spritzgießwerkzeug der eingangs genannten Art so zu gestalten, dass sich mit ihm Werkstücke mit einem Querkanal erzeugen lassen, ohne dass das Spritzgießwerkzeug hierzu zum Entformen des Werkstückes aufwendig gestaltet sein muss. Weiterhin soll ein mit einem solchen Spritzgießwerkzeug erzeugbares Werkstück geschaffen werden.

Das erstgenannte Problem wird erfindungsgemäß dadurch gelöst, dass der Querkanalkern als schnabelförmiges Kopfstück schwenkbar am freien Ende des einen Kernstempels befestigt ist und in dem Kernstempel ein Schwenkantrieb zum Verschwenken des Querkanalkerns in seine zu dem anderen Kernstempel führende Schwenkstellung vorgesehen ist.

Durch diese erfindungsgemäße Gestaltung des Querkanalkerns vermag dieser beim Abziehen des Werkstückes von den Kernstempeln selbsttätig aus dem Querkanal heraus in die Kammer des Werkstückes zu schwenken, welche durch den den Querkanalkern tragenden Kernstempel erzeugt wurde. Deshalb ist nach dem Öffnen des Spritzgießwerkzeugs ein einfaches Abstreifen des Werkstückes von den Kernstempeln möglich. Entsprechend gelangt der Querkanalkern beim Einfahren des ihn tragenden Kernstempels selbsttätig in seine eine Verbindung zu dem anderen Kernstempel erzeugende Stellung, indem man nach dem Einfahren der Kernstempel den Schwenkantrieb betätigt, was automatisch erfolgen kann.

Der Schwenkantrieb ist besonders einfach gestaltet, wenn er gemäß einer vorteilhaften Weiterbildung der Erfindung durch einen in dem Kernstempel axial verschieblich geführten Stößel gebildet ist, und mit seinem querkanalseitigen Ende gegen einen Nocken des Querkanalkerns anliegt.

Die Betätigung des Schwenkantriebs erfolgt auf äußerst einfache Weise zwangsläufig beim Schließen des Spritzgießwerkzeugs, wenn der Stößel innerhalb des Spritzgießwerkzeugs mit seinem dem Querkanalkern abgewandten Ende auf einem Hebelarm einer Wippe aufsteht, von deren anderem Hebelarm ein Betätigungsstift bis gegen eine Abstreifplatte für das Werkstück führt.

Wenn der durch den Querkanalkern mit dem anderen Kernstempel verbundene Kernstempel einen relativ geringen Querschnitt hat, besteht beim Spritzgießen die Gefahr, dass sich dieser querschnittsgeringe Kernstempel durch den Druck der Spritzgießmasse nach einer Seite hin wegdrückt. Dass lässt sich erfindungsgemäß dadurch verhindern, dass der Querkanalkern an seinem freien Ende durch eine Kupplung mit dem Kernstempel verbindbar ist. Hierdurch bilden die beiden Kernstempel beim Spritzgießen eine stabile Einheit.

Die Kupplung gelangt in Endstellung des Querkanalkerns zwangsläufig in eine Schließstellung und löst sich beim Abstreifen des Werkstückes automatisch, wenn gemäß einer anderen Weiterbildung der Erfindung die Kupplung durch eine kegelförmige Spitze des Kernstempels und eine entsprechende Ausnehmung in dem Querkanalkern gebildet ist.

Das zweitgenannte Problem, nämlich die Schaffung eines Werkstückes mit zwei von einer Seite aus in das Werkstück hineinführenden Kammern, welche durch einen Querkanal an der tiefsten Stelle nach Art eines Siphons miteinander verbunden sind, wird erfindungsgemäß dadurch gelöst, dass der Querkanal die Form eines zykloidenförmig gekrümmten, sich im Querschnitt von der einen Kammer zur anderen Kammer hin verjüngenden Schnabels hat. Durch diese Gestaltung wird es möglich, das Werkstück mittels eines sehr einfach ausgebildeten Spritzwerkzeugs zu erzeugen.

Die Erfindung lässt verschiedene Ausführungsformen zu. Zur weiteren Verdeutlichung ihres Grundprinzips sind in der Zeichnung ein erfindungsgemäßes Werkstück und eine Spritzgießform zu seiner Erzeugung dargestellt und werden nachfolgend beschrieben. Die Zeichnung zeigt in
- Fig.1: einen senkrechten Schnitt durch ein Werkstück nach der Erfindung,
- Fig.2: eine Draufsicht auf das Werkstück,
- Fig.3: eine perspektivische Gesamtansicht eines Spritzgießwerkzeugs zur Herstellung des Werkstückes nach den Figuren 1 und 2,
- Fig.4: einen senkrechten Schnitt durch einen Teilbereich des Spritzgießwerkzeugs,
- Fig.5: eine Seitenansicht des oberen Bereiches zweier Kernstempel des Spritzgießwerkzeugs,
- Fig.6: die Seitenansicht nach Figur 5 in einer abweichenden Arbeitsstellung der Kernstempel,
- Fig.7: einen senkrechten Schnitt durch einen eine weitere Einzelheit der Erfindung zeigenden Bereich.

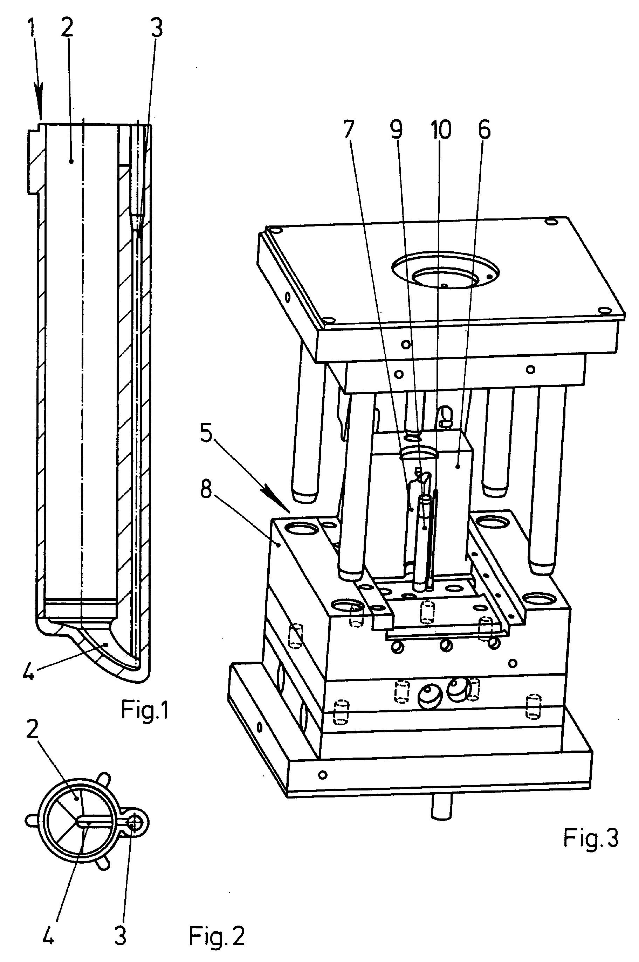

Die Figur 1 zeigt ein Werkstück 1, in welches von oben her parallel zueinander eine zylindrische Kammer 2 relativ großen Querschnitts und eine zylindrische Kammer 3 geringen Querschnitts hineinführen. Diese beiden Kammern 2, 3 sind am unteren Ende durch einen schnabelförmig verlaufenden Querkanal 4 siphonartig miteinander verbunden.

Die Figur 2 zeigt, dass die beiden Kammern 2, 3 zylindrisch sind und die Kammer 3 einen wesentlich geringeren Durchmesser hat als die Kammer 2. Weiterhin sieht man in der Figur 2 den Querkanal 4.

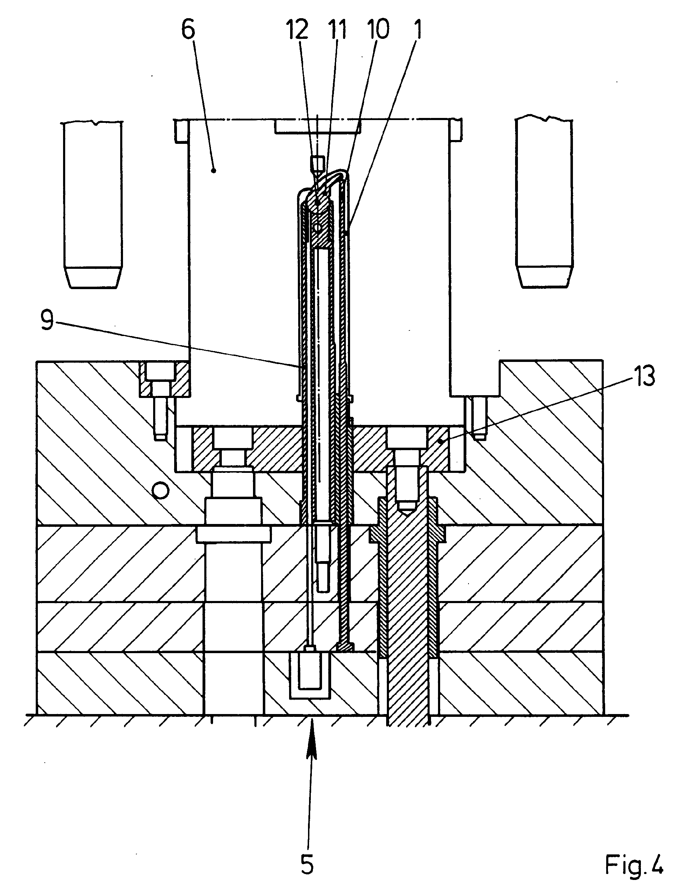

Die Figur 3 zeigt ein Spritzgießwerkzeug 5 mit einer Backe 6, welche eine halbe Hohlform 7 aufweist. Eine weitere Backe mit einer gleichen halben Hohlform wurde der Übersicht halber nicht dargestellt. Die Backe 6 ist ebenso wie die nicht gezeigte Backe quer zur Zeichnungsebene verfahrbar auf einem Sockel 8 angeordnet, so dass die Hohlform 7 zum Spritzen durch Aneinanderfahren der Backen 6 geschlossen und zum Entnehmen des Werkstückes 1 auseinander gefahren werden kann.

Vom Sockel 8 her ragen zwei Kernstempel 9, 10 senkrecht nach oben in die Hohlform 7 hinein. Diese Kernstempel 9, 10 dienen dazu, die Kammern 2, 3 des Werkstückes 1 zu erzeugen.

Die Figur 4 zeigt im Schnitt einen Teilbereich des Spritzgießwerkzeugs 5 und das damit erzeugte Werkstück 1, welches auf den Kernstempeln 9, 10 ruht. Zu sehen ist, dass der Kernstempel 9 an seinem freien Ende einen schnabelförmig gestalteten Querkanalkern 11 trägt, der um eine Achse 12 des Kernstempels 9 schwenkbar ist. Zum Abstreifen des Werkstückes 1 von den Kernstempeln 9, 10 dient eine nach oben verfahrbare Abstreifplatte 13, welche bei ihrem Hub nach oben gegen das Werkstück 1 zu gelangen vermag und dieses dadurch nach oben schiebt. Dabei schwenkt der Querkanalkern um die Achse 12 in eine fluchtende Stellung zu dem Kernstempel 9, so dass er die Abstreifbewegung nicht behindert.

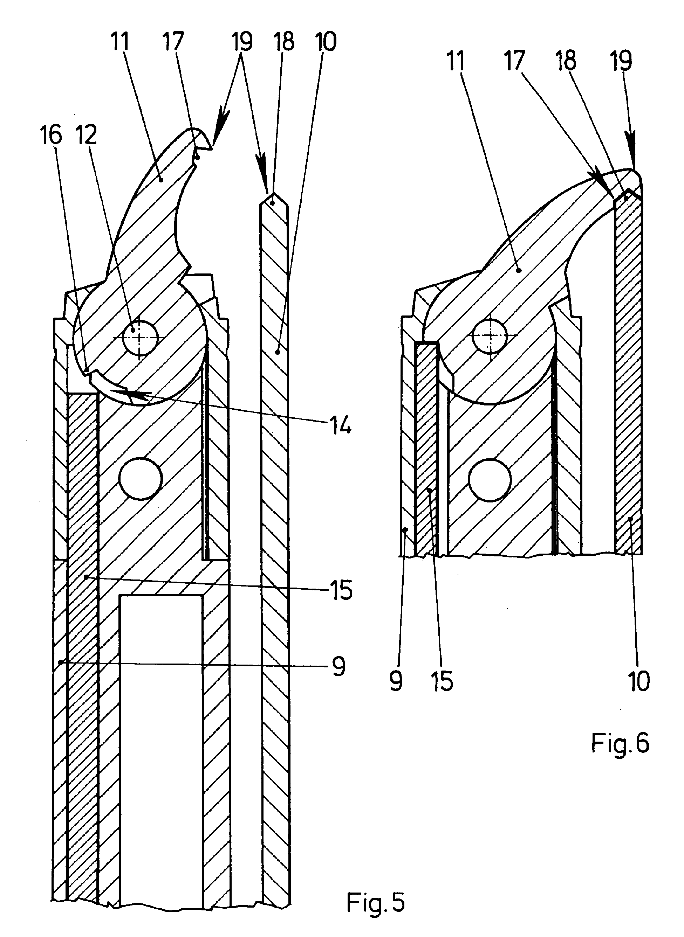

Die Detaildarstellung gemäß Figur 5 verdeutlicht, wie der Querkanalkern 11 um die Achse 12 schwenkbar mit dem Kernstempel 9 verbunden ist. Zum Verschwenken des Querkanalkernes 11 dient ein Schwenkantrieb 14. Dieser hat einen in dem Kernstempel 9 axial verschieblich angeordneten Stößel 15, der bei Bewegung nach oben gegen einen Nocken 16 des Querkanalkernes 11 zu gelangen vermag und dadurch den Querkanalkern 11 im Uhrzeigersinn verschwenkt.

Die Figur 5 zeigt weiterhin, dass der Querkanalkern 11 nahe seines freien Endes eine Ausnehmung 17 und der Kernstempel 10 eine entsprechende Spitze 18 hat. Diese Ausnehmung 17 und die Spitze 18 bilden zusammen eine Kupplung 19.

In der in Figur 6 gezeigten Position der Bauteile wurde der Stößel 15 so weit nach oben verfahren, dass der Querkanalkern 11 die Kernstempel 9, 10 miteinander verbindet, wozu die Spitze 18 in die Ausnehmung 17 eingreift. Die Spitze 18 bildet einen Winkel von 100°. Dadurch kommt die Ausnehmung 17 von selbst von der Spitze 18 frei, wenn sich der Querkanalkern 11 durch Hochschieben des in Figur 4 gezeigten Werkstückes entgegengesetzt zum Uhrzeigersinn verschwenkt.

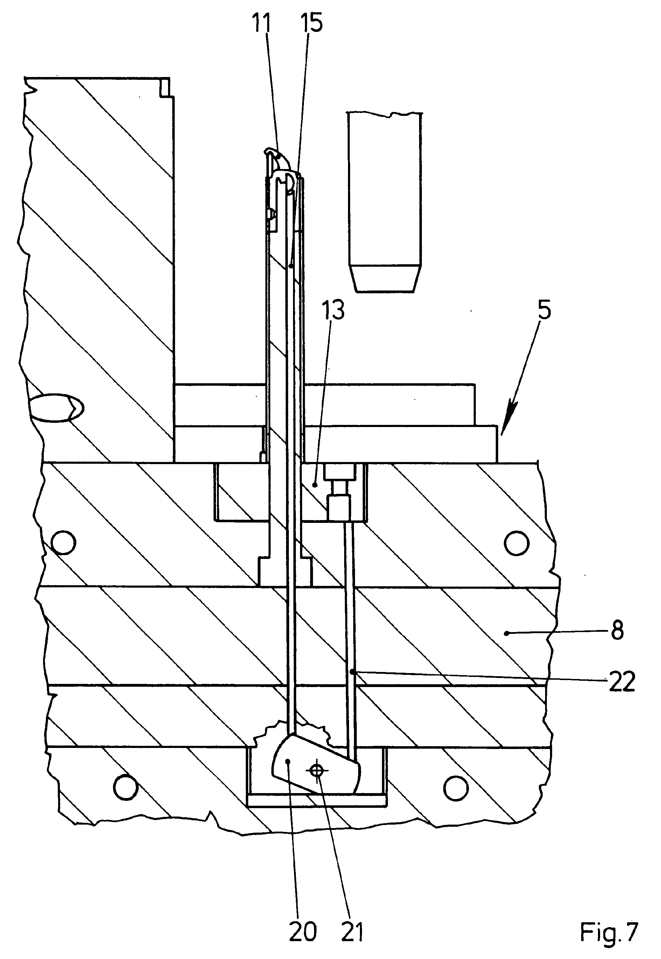

Die Figur 7 zeigt, dass im Sockel 8 des Spritzgießwerkzeugs 5 eine Wippe 20 um eine Schwenkachse 21 verschwenkbar gelagert ist. Auf einem Hebelarm dieser Wippe 20 stützt sich der Stößel 15 ab, während auf dem anderen Hebelarm ein Betätigungsstift 22 aufsitzt. Dieser berührt mit seinem oberen Ende die Abstreifplatte 13 und ist axial verschieblich im Sockel 8 geführt. Bewegt man die Abstreifplatte 13 nach oben, dann kann sich auch der Betätigungsstift 22 nach oben verschieben. Das ermöglicht es der Wippe 20, sich entgegen dem Uhrzeigersinn zu verschwenken, wodurch sich der Stößel 15 nach unten bewegen kann und in die in Figur 5 gezeigte Stellung gelangt, wodurch der Querkanalkern 11 nicht mehr gesperrt ist und sich beim Abstreifen des Werkstückes 1 in eine solche Stellung verschwenkt, dass er dieses Abstreifen nicht behindert.

### Bezugszeichenliste

- 1: Werkstück
- 2: Kammer
- 3: Kammer
- 4: Querkanal
- 5: Spritzgießwerkzeug

- 6: Backe
- 7: Hohlform
- 8: Sockel
- 9: Kernstempel
- 10: Kernstempel

- 11: Querkanalkern
- 12: Achse
- 13: Abstreifplatte
- 14: Schwenkantrieb
- 15: Stößel

- 16: Nocken
- 17: Ausnehmung
- 18: Spitze
- 19: Kupplung
- 20: Wippe

- 21: Schwenkachse
- 22: Betätigungsstift

## Patentansprüche

1. Spritzgießwerkzeug (5) für ein Werkstück (1) mit zwei von einer Seite aus in das Werkstück (1) hineinführenden Kammern (2, 3), welche durch einen Querkanal (4) an der tiefsten Stelle nach Art eines Siphons miteinander verbunden sind, wozu das Spritzgießwerkzeug (5) zwei parallel zueinander ausgerichtete, in eine Hohlform (7) einführbare Kernstempel (9, 10) und einen Querkanalkern (11) hat, **dadurch gekennzeichnet, dass** der Querkanalkern (11) als schnabelförmiges Kopfstück schwenkbar am freien Ende des einen Kernstempels (9) befestigt ist und in dem Kernstempel (9) ein Schwenkantrieb (14) zum Verschwenken des Querkanalkerns (11) in seine zu dem anderen Kernstempel (10) führende Schwenkstellung vorgesehen ist.

2. Spritzgießwerkzeug nach Anspruch 1, **dadurch gekennzeichnet, dass** der Schwenkantrieb (14) durch einen in dem Kernstempel (9) axial verschieblich geführten Stößel (15) gebildet ist und mit seinem querkanalseitigen Ende gegen einen Nocken (16) des Querkanalkerns (11) anliegt.

3. Spritzgießwerkzeug nach den Ansprüchen 1 oder 2, **dadurch gekennzeichnet, dass** der Stößel (15) innerhalb des Spritzgießwerkzeugs (5) mit seinem dem Querkanalkern (11) abgewandten Ende auf einem Hebelarm einer Wippe (20) aufsteht, von deren anderem Hebelarm ein Betätigungsstift (22) bis gegen eine Abstreifplatte für das Werkstück führt.

4. Spritzgießwerkzeug nach zumindest einem der vorangehenden Ansprüche, **dadurch gekennzeichnet, dass** der Querkanalkern (11) an seinem freien Ende durch eine Kupplung (19) mit dem Kernstempel (10) verbindbar ist.

5. Spritzgießwerkzeug nach Anspruch 4, **dadurch gekennzeichnet, dass** die Kupplung (19) durch eine kegelförmige Spitze (18) des Kernstempels (10) und eine entsprechende Ausnehmung (17) in dem Querkanalkern (11) gebildet ist.

6. Werkstück (1) mit zwei von einer Seite aus in das Werkstück (1) hineinführenden Kammern (2, 3), welche durch einen Querkanal (4) an der tiefsten Stelle nach Art eines Siphons miteinander verbunden sind, **dadurch gekennzeichnet, dass** der Querkanal (4) die Form eines zykloidenförmig gekrümmten, sich im Querschnitt von der einen Kammer (2) zur anderen Kammer (3) hin verjüngenden Schnabels hat.
